# EUROPEAN PATENT SPECIFICATION

(11) **EP 1 598 136 B1**
(45) Date of publication and mention of the grant of the patent: **27.09.2006**
(21) Application number: 04252941.2
(22) Date of filing: 18.05.2004
(51) Int. Cl.: B23D 49/16

(54) **Output shaft assembly for power tool and power tool incorporating such assembly**
Anordnung eines Ausgangsstössels und motorisiertes Werkzeug mit einer solchen Anordnung
Assemblage d'un arbre de sortie et outil motorisé avec un tel assemblage

(43) Date of publication of application: 23.11.2005
(73) Proprietor: Black & Decker Inc., Newark, Delaware 19711 (US)
(72) Inventor: Million, Phil, Black & Decker, County Durham DL16 6JG (GB)
(74) Representative: Shaya, Darrin Maurice

(56) References cited:
- EP-A- 0 158 325
- DE-A- 3 635 470
- US-A- 3 729 822

## Description

The present invention relates to an output shaft assembly for a power tool, and relates particularly, but not exclusively, to an output shaft assembly for a jigsaw having a scrolling mode (i.e. in which an output shaft supporting a jigsaw blade can rotate about its longitudinal axis relative to the jigsaw housing) and an orbital mode (i.e. in which the output shaft is pivotable relative to the housing about an axis transverse to its longitudinal axis, so that an oscillating motion is superimposed on the axial reciprocating motion of the jigsaw blade). The invention also relates to a power tool incorporating such an output shaft assembly.

A jigsaw having scrolling and orbital modes is disclosed in EP 0158325. The jigsaw has an output shaft of generally circular cross section in order to enable the output shaft to pivot about its longitudinal axis in the scrolling mode of the jigsaw relative to a scotch yoke mechanism driving the output shaft in a reciprocating motion relative to the jigsaw housing.

US 3 729 822 shows another jigsaw. In order to enable the orientation of the output shaft of such jigsaws relative to the jigsaw housing, and relative to any jigsaw blade mounted to the output shaft, to be controlled, the output shaft is provided with cross pins at its upper and lower ends which cooperate with slots in a scroller knob and a blade support assembly respectively, in order to prevent rotation of the output shaft relative to the scroller knob and blade support. This causes the disadvantage that the slots with which the cross pins cooperate must be as long as the distance of travel of the cross pins in an axial direction in order to ensure permanent engagement of the cross pins with the slot, as a result of which the overall height of the jigsaw is large, which obstructs viewing of the jigsaw blade during cutting thereof, and the width of the forward part of the jigsaw around the output shaft is also large as a result of this.

The overall length and diameter of the parts of the jigsaw around the output shaft can be made smaller by having an output shaft of generally flat cross-section which fits into a correspondingly shaped slot in a scroller knob at its upper end, and to the lower end of which a jigsaw blade is clamped. However, it has not been possible to provide a scroller mode of such jigsaws because of the difficulty in making the output shaft rotatable relative to the jigsaw housing.

Preferred embodiments of the present invention seek to overcome the above disadvantages of the prior art.

According to an aspect of the present invention, there is provided an output shaft assembly according to claim 1.

By providing an output shaft having first and second portions adjacent respective ends of the shaft and having non-circular cross-section in a direction transverse to a longitudinal axis of the shaft, and at least one third portion between the first and second portions and having at least partially substantially circular external cross-section section in a direction transverse to the longitudinal axis of the shaft to allow the shaft to pivot about the longitudinal axis relative to a drive mechanism for driving the shaft in a reciprocating motion relative to the tool housing, this provides the advantage of combining the benefits of a substantially flat output shaft enabling a more compact construction of the tool in the vicinity of the output shaft, and rotation of the output shaft relative to a drive mechanism, for example to provide a scroller mode when the tool is a jigsaw.
At least one said third portion may be formed from a plurality of insert members mounted to the output shaft in use.

This provides the advantage of simplifying construction of the output shaft, which in turn reduces the cost of manufacture of a tool incorporating the output shaft.

The output shaft may have substantially uniform cross-section in a direction transverse to said longitudinal axis prior to mounting of said inserts to said output shaft.

At least one said insert member may have substantially D-shaped cross-section.

The assembly may further comprise at least one drive member pivotably mounted to at least one said third portion in use for engaging a drive mechanism for driving said shaft in a reciprocating motion relative to the tool housing.

According to another aspect of the present invention, there is provided a power tool according to claim 6.

The power tool is preferably a jigsaw.

Preferred embodiments of the invention will now be described, by way of example only and not in any limitative sense, with reference to the accompanying drawings, in which:-
Figure 1 is a cross-sectional elevation view of a jigsaw embodying the present invention;
Figure 2 is a perspective view of a blade support assembly, jigsaw blade and scrolling knob of the jigsaw of Figure 1;
Figure 3 (a) is a perspective view of an upper bearing of the blade support assembly of Figure 2;
Figure 3(b) is a front view of the upper bearing of Figure 3(a);
Figure 3(c) is a top view of the upper bearing of Figure 3(a);
Figure 3(d) is a side view of the upper bearing of Figure 3(a);
Figure 3(e) is a bottom view of the upper bearing of Figure 3(a);
Figure 3(f) is a side cross sectional view of the upper bearing of Figure 3(a);
Figure 4 is a side view of the blade support assembly, jigsaw blade and scrolling knob of Figure 2, together with a drive mechanism of the jigsaw of Figure 1, but having an alternative embodiment of scroll selector to the arrangement shown in Figure 1;
Figure 5(a) is a perspective view of the scroller knob and scroller locking mechanism of Figure 4 in a scrolling mode of the jigsaw;
Figure 5(b) is a perspective view, corresponding to Figure 5(a) of the scroller knob and scroller locking mechanism in a conventional mode of the jigsaw;
Figure 5(c) is a perspective view, corresponding to Figure 5(a) of the scroller knob and scroller locking mechanism in an orbital mode of the jigsaw;
Figure 6(a) is a front view of a scotch yoke, output shaft and blade clamp of the blade support assembly of Figure 2;
Figure 6(b) is a perspective view of the scotch yoke, output shaft and blade clamp of Figure 6(a);
Figure 6(c) is a top view of the scotch yoke of Figures 6(a) and 6(b);
Figure 7 is a perspective view of the blade support assembly of Figure 2;
Figure 8 is a top view of the blade support assembly of Figure 7;
Figure 9 is a rear view of the blade support assembly of Figure 7;
Figure 10 is a side cross sectional view along the line A-A in Figure 8;
Figure 11 is a view along the line B-B in Figure 10;
Figure 12 is an enlarged view of the lower part of the blade support assembly of Figure 10 when the blade is not cutting a workpiece; and
Figure 13 is a view corresponding to Figure 12 when the blade is cutting a workpiece.

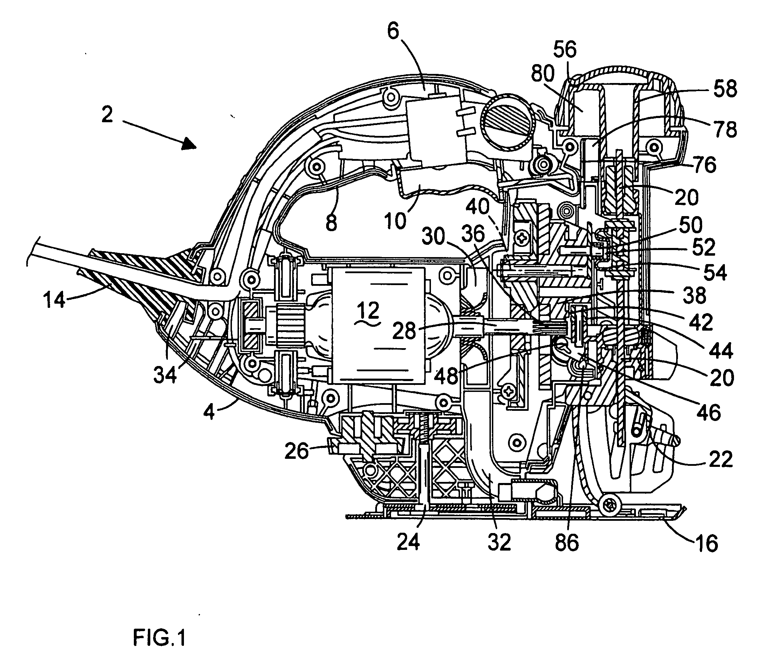

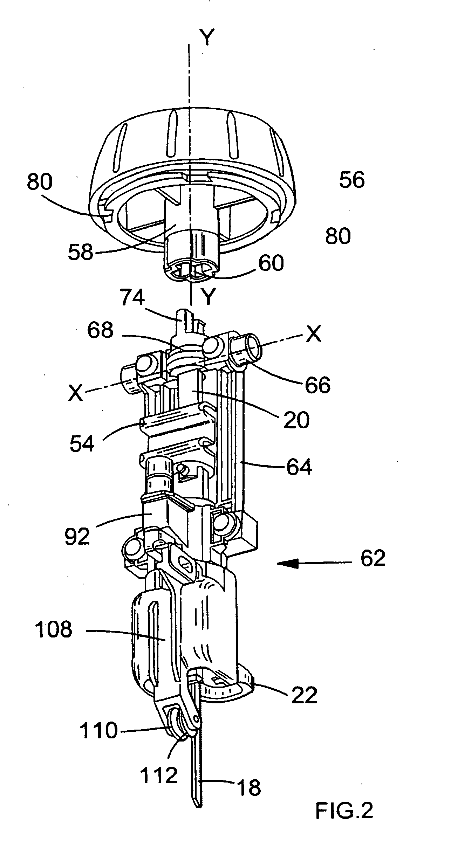

Referring to Figure 1, a jigsaw 2 has a housing 4 comprising two clam shell halves 6 (only one of which is shown in Figure 1) defining a handle 8 having a trigger switch 10 for operating a motor 12 supplied with electrical power via a cable 14. A shoe 16 for resting on a workpiece (not shown) is located at a lower part of the housing 4, and a jigsaw blade 18 (Figure 2) is attached to the lower end of an output shaft 20 by means of a blade clamp mechanism 22. The operation of the blade clamp mechanism 22 is not relevant to an understanding of the present invention and will therefore not be described in greater detail herein. The orientation of the shoe 16 is adjustable relative to the housing 4 to enable bevel cutting, and can be fixed by means of a clamping screw 24 operated by a locking mechanism 26, which is also not relevant to an understanding of the present invention and will therefore not be described in greater detail.

The motor 12 drives a shaft 28 which carries a fan 30. When the fan 30 rotates, air is expelled via duct 32 and may be used to blow sawdust away from the vicinity of blade 18, and draws air through inlets 34 in housing 4 to cool motor 12. The shaft 28 carries a pinion 36 which meshes with a drive gear 38 mounted about axis 40, the gear 38 carrying a cam surface 42 on its front face. A cam follower 44 is selectively engageable with cam surface 42 by means of cam portion 46 of scroll selector 48 to operate an orbital mode of the jigsaw in a manner which will be described in greater detail below. The gear 38 also carries an eccentric pin 50 which slidably fits in a slot 52 of scotch yoke mechanism 54 mounted to output shaft 20.

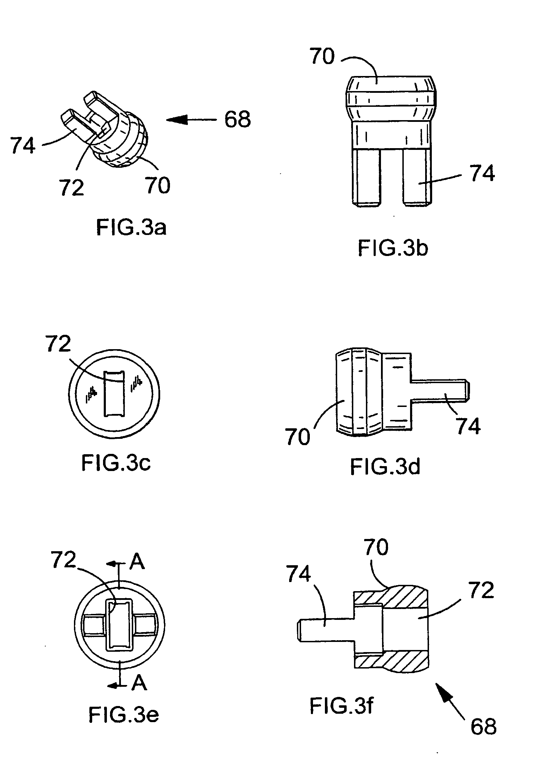

Referring now to Figure 2, a scroller knob 56 is rotatably mounted to the housing 4 for adjusting the orientation of the blade 18 relative to the housing 4. The scroller knob 56 has a collar portion 58 having a cruciform bore 60 therein, the purpose of which is described in greater detail below. A blade support assembly 62 has a support housing 64 having trunnions 66 which are received in corresponding recesses (not shown) in housing 4 to enable the assembly 62 to pivot about axis X-X relative to the housing 4 in the orbital mode of the jigsaw. An upper bearing 68 (Figure 3) has a partially spherical portion 70 which is rotatable about axis Y-Y relative to support housing 64, and has a slot 72 therethrough for receiving the output shaft 20 such that the output shaft 20 can slide in the direction of axis Y-Y relative to the upper bearing 68, but is prevented from moving relative to the bearing 68 in a direction transverse to the axis Y-Y. The upper bearing 68 also has a pair of legs 74 which are received in cruciform bore 60 of scroller knob 56 such that the bearing 68 (and therefore the output shaft 20) rotates with the scroller knob 56 about axis Y-Y, but limited pivoting movement of the bearing 68 about axis X-X relative to the scroller knob 56 is permitted.

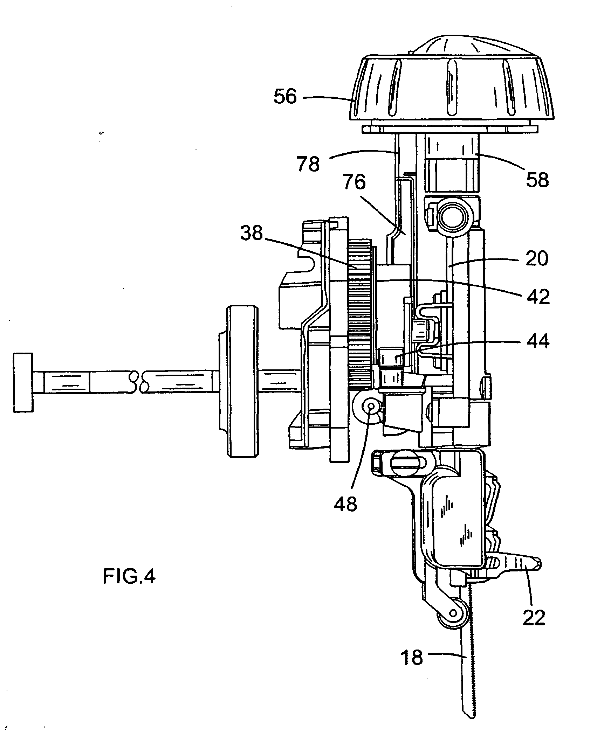

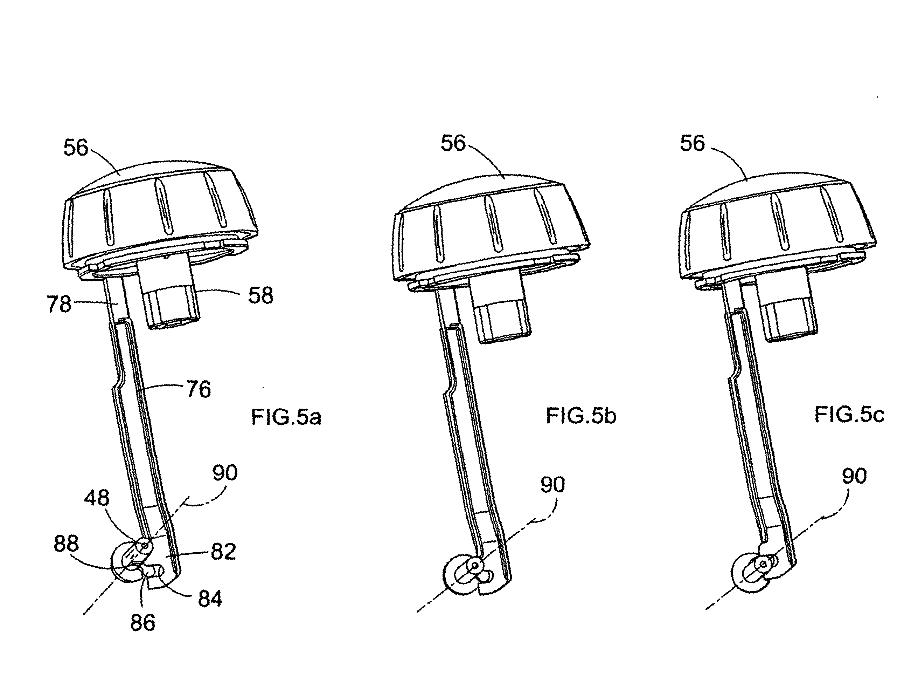

A mechanism for selecting between the scrolling, orbital and conventional modes of the jigsaw is shown in detail with reference to Figures 4 and 5. A locking arm 76 is slidably mounted to the housing 4 and is moveable between a lower position, as shown in Figure 5(a) in which the scroller knob 56 can rotate relative to the housing 4, and two upper positions shown in Figures 5(b) and 5(c) in which an upper end 78 of the locking arm 76 is received in one or more slots 80 in the underside of scroller knob 56 to prevent rotation of the scroller knob 56 about axis Y-Y relative to the housing 4. The scroll selector 48 is rotatably mounted to the housing 4 and can be rotated by means of a mode selector knob (not shown) on the housing 4, and a lower end 82 of locking arm 76 has a rounded slot 84 which receives a rounded tooth 86 provided on scroll selector 48 such that rotation of scroll selector 48 relative to the housing 4 causes movement of the locking arm 76 parallel to the axis Y-Y. The scroll selector 48 also carries a cam surface, which is a protrusion 46 in the embodiment of Figure 1 and a groove 88 in the embodiment of Figures 5(a) to 5(c).

Referring now to Figures 5(a) to 5(c), in the position shown in Figure 5(a), the rotational position of scroll selector 48 about axis 90 relative to the housing 4 is such that the upper end 78 of locking arm 76 is not receiving in any of the grooves 80 in scroller knob 56, as a result of which the scroller knob 56 (and therefore also the output shaft 20 and jigsaw blade 18) can rotate about axis Y-Y relative to the housing 4 to permit scrolling motion of the blade 18. At the same time, it is desirable to prevent orbital motion of the blade 18 when the jigsaw is in the scroller mode, since it is difficult to operate the jigsaw in the orbital mode when the orientation of the blade 18 relative to the housing 4 is not forwards. This is achieved in the position shown in Figure 5(a) because the lower part 82 of locking arm 76 is not received within recess 88, as a result of which the locking arm 76 is urged forwards relative to the scroll selector 48. This in turn abuts lower portion 92 (Figure 2) of support housing 64, which causes the support assembly 62 to pivot forwards against the action of a spring (not shown) about axis X-X so that cam follower 44 is held out of engagement with cam face 42 on gear 38. As a result, pendulum motion cannot be imparted to the support assembly 62 as the gear 38 rotates.

As the scroll selector 48 is rotated anticlockwise about axis 90 to the position shown in Figure 5(b), engagement of tooth 86 with slot 84 causes the locking arm 76 to move upwards so that its upper end 78 is received in a slot 80 in scrolling knob 56 to prevent rotation of the scrolling knob 56 relative to the housing 4. At the same time, the lower end 82 of the locking arm 76 is still not received in recess 88, as a result of which the cam follower 44 is still held out of engagement with the cam surface 42 on gear 38, so pendulum action cannot be imparted to the support assembly 62.

As the scroll selector 48 is further rotates anticlockwise about axis 90 to the position shown in Figure 5(c), the upper end 78 of locking arm 76 is received further in groove 80, but the lower end 82 of locking arm 76 is now received in recess 88 on scroll selector 48. As a result, the support assembly 62 and locking arm 76 can pivot under the action of the spring (not shown) to bring the cam follower 44 into engagement with cam surface 42 on gear 38, so that pendulum action is imparted to the support assembly 62 as the gear 38 is rotated by motor 12. It can therefore be seen that the scrolling mode is not permitted when the orbital mode is active, and vice versa. By operating the locking arm 76 by means of the engagement of a tooth 86 in a groove 84 (as opposed to cooperating rack and pinion), this provides the advantage of significantly simplifying manufacture and assembly of the scroll locking mechanism, which in turn reduces the cost of production of the jigsaw.

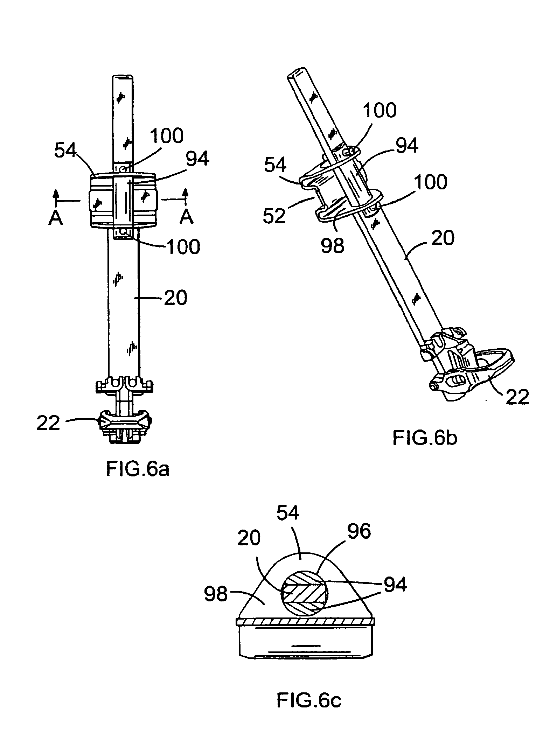

Referring now to Figures 6(a) to 6(c), the output shaft 20 is of rectangular cross section along most of its length. This provides the advantage that the ends of the shaft 20 can be non-rotatably mounted to adjacent parts without the need to provide cross pins (which would be necessary in the case of a shaft of circular cross section) through the shaft which would need to fit into slots at least as deep as the distance of travel of the cross pins during reciprocating motion of the shaft 20. As a result, the parts of the jigsaw at the ends of the shaft 20 can me made of significantly more compact construction than is the case with a shaft of circular cross section.

In order to enable rotation of the shaft 20 relative to the scotch yoke 54 in scrolling mode of the jigsaw, a pair of generally D-shaped inserts 94 are mounted on opposite sides of the shaft 20 to provide that part of the shaft with a partially circular external cross section, and the scotch yoke 54 is rotatably mounted to the shaft 20 by means of circular apertures 96 in upper and lower flanges 98 of the scotch yoke 54. The scotch yoke 54 is then fixed to the shaft 20 by means of pins 100 through D-shaped inserts 94 and shaft 20 so that the scotch yoke 54 cannot move axially relative to the shaft 20, but can pivot about relative to the shaft so that the slot 52 of scotch yoke 54 continues to face eccentric pin 50 (Figure 1) regardless of the orientation of the blade 18 relative to the housing 4. This enables the blade 18 to be driven in a reciprocating manner when the jigsaw is in the scroller mode.

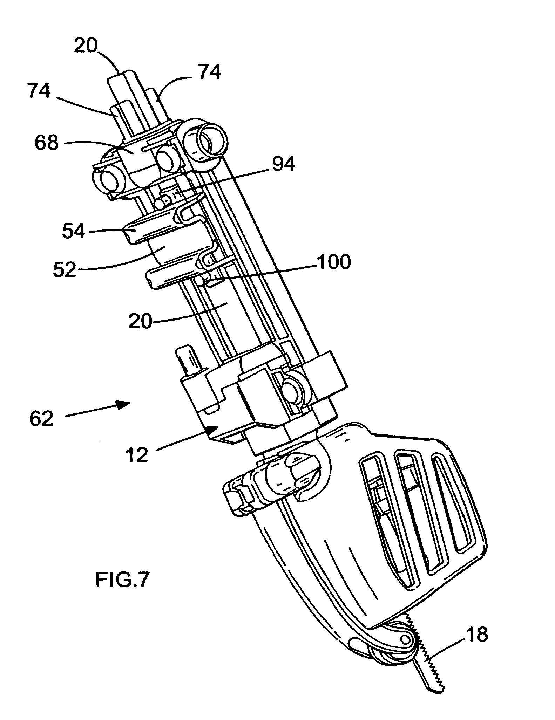

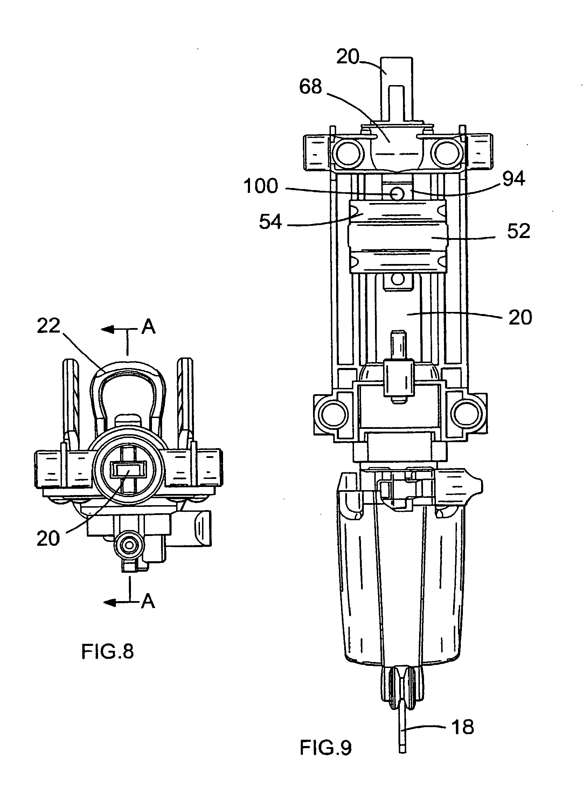

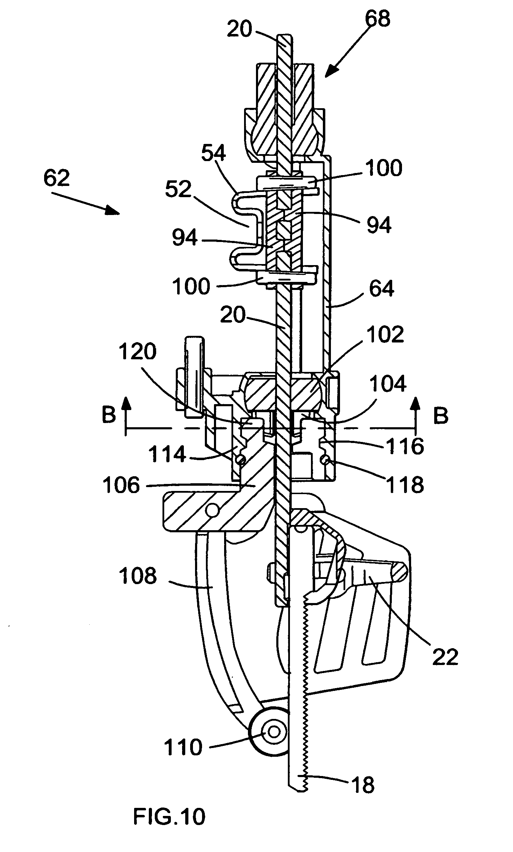

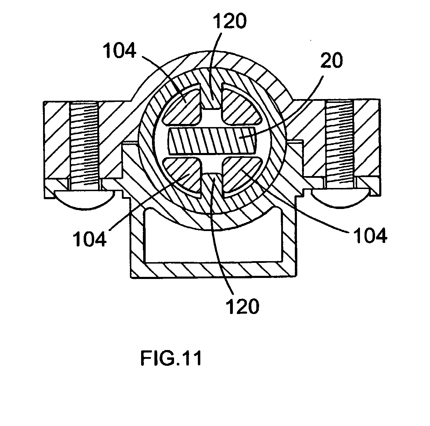

The support assembly 62 of Figure 2 is shown in detail in Figures 7 to 13. A lower bearing 102 is rotatably mounted about the longitudinal axis of the output shaft 20 to the support housing 64 and has a slot, similar to the slot 72 in upper bearing 68, for slidably receiving the shaft 20 so that the shaft can execute reciprocating axial movement relative to the bearings 68, 102, but is prevented from moving in a direction transverse to its longitudinal axis. The lower bearing 102 has four protruding legs 104 at its lower end, so that a cruciform slot (Figure 11) is defined between the legs 104 for receiving the shaft 20 and for cooperating with ribs 120 provided on a control bearing 106 such that the control bearing 106 rotates with the lower bearing 102 and output shaft 20 as the output shaft rotates about its longitudinal axis. The control bearing 106 is rotatably mounted to support housing 64 by means of engagement of a flange 116 on support housing 64 with a groove in control bearing 106.

The control bearing 106 has a support arm 108 which carries a blade support roller 110 at a distal end thereof. The blade support roller 110 has a groove 112 (Figure 1) for receiving the rear face of jigsaw blade 18. Because the control bearing 106 is rotatably mounted to support housing 64, the blade support roller 110 remains in contact with the jigsaw blade 18 in the scrolling, orbital and conventional modes of the jigsaw. The lower bearing 102, control bearing 106 and support housing 64 are so dimensioned that limited pivoting of control bearing 106 relative to lower bearing 102 is possible about an axis transverse to the longitudinal axis of the shaft 20, and limited movement of the control bearing 106 relative to the support housing 64 is possible, with movement due to clearance 122 between control bearing 106 and support housing 64 being taken up by an elastomeric seal 118, which also prevents leakage of lubricant from the interior of the support assembly 62.

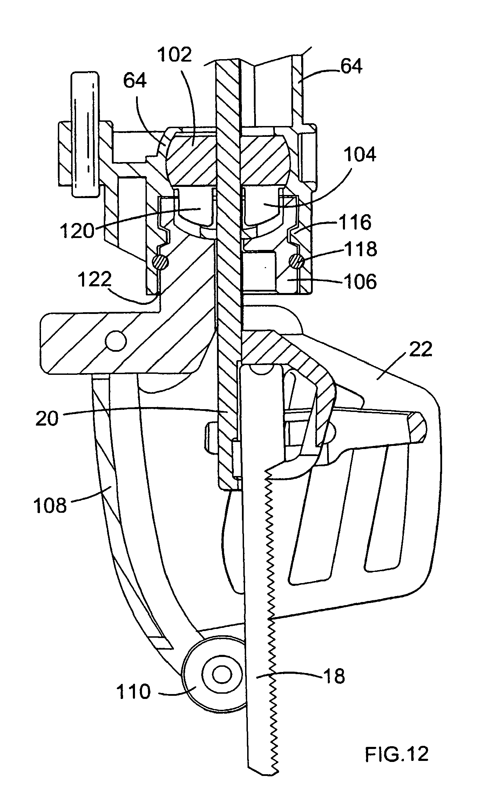

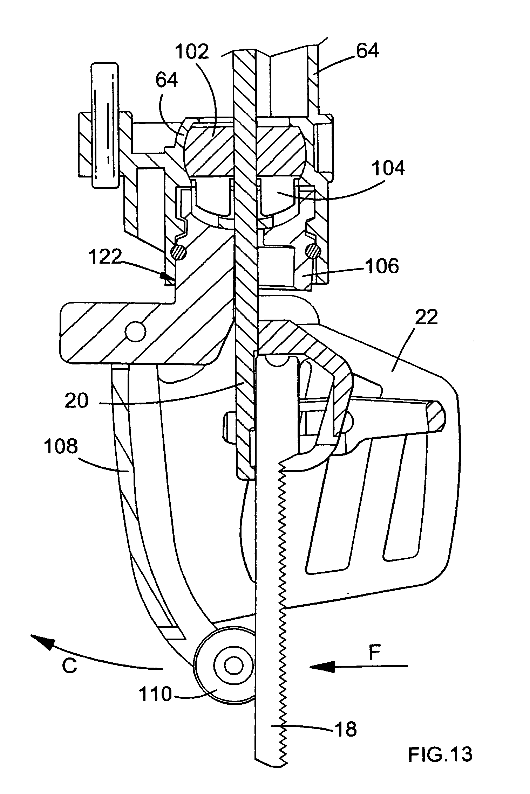

Referring now in detail to Figures 12 and 13, when the jigsaw is used to cut a workpiece (not shown), the reaction force from the workpiece acting on the blade 18 tends to cause the blade 18 to pivot clockwise relative to the shaft 20 from the position shown in Figure 12 to that shown in Figure 13. As a result, a turning moment is applied via blade support roller 110 to the support arm 108 in the direction of arrow C shown in Figure 13. This turning moment is opposed by an opposite turning moment applied to the control bearing 106 by the support housing 64 as the clearance 122 is reduced from the arrangement shown in Figure 12c to that shown in Figure 13.

However, as a result of the limited pivoting movement permitted between control bearing 106 and lower bearing 102, the turning moment applied by the support arm 108 to the support housing 64 is not transferred to the lower bearing 102, and is therefore not transferred to the shaft 20. The therefore provides the advantage that frictional forces between the lower bearing 102 and shaft 20 are not increased as a result of reaction force F (Figure 13) acting on blade support roller 110.

It will be appreciated by persons skilled in the art that the above embodiments have been described by way of example only, and not in any limitative sense, and that various alterations and modifications are possible without departure from the scope of the invention as defined by the appended claims.

## Claims

1. An output shaft assembly for a power tool having a tool housing, a motor arranged in the tool housing, and an output shaft adapted to be driven in a reciprocating motion relative to the tool housing by means of the motor and to support a working member of the tool for reciprocating motion of the working member relative to the tool housing, the output shaft assembly comprising:-
an output shaft (20) having first and second portions extending from adjacent respective ends of said shaft (20) and having non-circular cross-section in a direction transverse to a longitudinal axis (Y-Y) of said shaft (20), and at least one third portion between said first and second portions and having at least partially substantially circular external cross-section in use in a direction transverse to the longitudinal axis (Y-Y) of said shaft (20) to allow said shaft (20) to pivot about said longitudinal axis (Y-Y) relative to a drive mechanism for driving said shaft (20) in a reciprocating motion relative to the tool housing (4) **characterised in that** at least one of said first and second portions in use extends through a bearing (68, 102).

2. An assembly according to claim 1, wherein at least one said third portion is formed from a plurality of insert members (94) mounted to the output (20) in use.

3. An assembly according to claim 2, wherein the output shaft (20) has substantially uniform cross-section in a direction transverse to said longitudinal axis (Y-Y) prior to mounting of said inserts (94) to said output shaft (20).

4. An assembly according to claim 2 or 3, wherein at least one said insert member (94) has substantially D-shaped cross-section.

5. An assembly according to any one of the preceding claims, further comprising at least one drive member (54) pivotably mounted to at least one said third portion in use for engaging a drive mechanism for driving said shaft (20) in a reciprocating motion relative to the tool housing (4).

6. A power tool comprising a tool housing (4), a motor (12) arranged in the tool housing (4), and an output shaft assembly according to any one of the preceding claims having an output shaft (20) adapted to be driven in a reciprocating motion relative to the tool housing (4) by means of the motor (12) and to support a working member (18) of the tool for reciprocating motion of the working member (18) relative to the tool housing (4).

7. A power tool according to claim 6, wherein the power tool is a jigsaw.

## Patentansprüche

1. Ausgangsstößelanordnung für ein angetriebenes Werkzeug mit einem Werkzeuggehäuse, einem im Werkzeuggehäuse angeordneten Motor und einem Ausgangsstößel, der zum bezüglich dem Werkzeuggehäuse hin- und herbewegten Antreiben durch den Motor und zum Haltern eines Arbeitselementes des Werkzeugs zur Hin- und Herbewegung des Arbeitselementes bezüglich dem Werkzeuggehäuse angepasst ist, wobei die Ausgangsstößelanordnung aufweist: einen Ausgangsstößel (20) mit sich von benachbarten jeweiligen Enden des Stößels (20) erstreckenden ersten und zweiten Bereichen und mit einem in Richtung quer zur Längsachse (Y-Y) des Stößels (20) nicht-kreisförmigen Querschnitt, sowie mit mindestens einem dritten Bereich zwischen den ersten und zweiten Bereichen, der im Gebrauch in einer Richtung quer zur Längsachse (Y-Y) des Stößels (20) zumindest teilweise einen im Wesentlichen kreisförmigen äußeren Querschnitt hat, damit der Stößel (20) relativ zu einem Antriebsmechanismus für den Antrieb des Stößels mit einer Hin- und Herbewegung bezüglich dem Werkzeuggehäuse (4) um die Längsachse (Y-Y) schwenken kann, **dadurch gekennzeichnet, dass** sich zumindest einer der ersten und zweiten Bereiche im Gebrauch durch ein Lager (68, 102) erstreckt.

2. Anordnung nach Anspruch 1, bei der der mindestens eine dritte Bereich aus mehreren im Gebrauch am Stößel (20) befestigten Einsatzelementen (94) besteht.

3. Anordnung nach Anspruch 2, bei der der Ausgangsstößel (20) vor dem Anbringen der Einsätze (94) an ihm in Richtung quer zur Längsachse (Y-Y) einen im Wesentlichen gleichförmigen Querschnitt hat.

4. Anordnung nach Anspruch 2 oder 3, bei der mindestens einer der Einsätze (94) einen im Wesentlichen D-förmigen Querschnitt hat.

5. Anordnung nach einem der vorhergehenden Ansprüche, die ferner mindestens ein im Gebrauch an dem mindestens einen dritten Bereich schwenkbar befestigtes Antriebselement (54) für den Eingriff mit einem Antriebsmechanismus zum Antreiben des Stößels mit einer Hin- und Herbewegung bezüglich dem Werkzeuggehäuse (4) aufweist.

6. Angetriebenes Werkzeug mit einem Werkzeuggehäuse (4), einem im Werkzeuggehäuse (4) angeordneten Motor (12) und einer Ausgangsstößelanordnung gemäß einem der vorhergehenden Ansprüche, die einen zum hin- und herbewegten Antreiben durch den Motor (12) bezüglich dem Gehäuse (4) und zum Haltern eines Arbeitselementes (18) des Werkzeugs zur Hin- und Herbewegung bezüglich dem Werkzeuggehäuse (4) angepassten Ausgangsstößel (20) hat.

7. Angetriebenes Werkzeug nach Anspruch 6, bei dem das angetriebene Werkzeug eine Stichsäge ist.

## Revendications

1. Un assemblage d'arbre de sortie pour un outil motorisé comprenant un boîtier d'outil, un moteur agencé dans le boîtier d'outil, et un arbre de sortie adapté pour être entraîné en un mouvement de va et vient par rapport au boîtier d'outil au moyen du moteur et pour supporter un organe de travail de l'outil devant faire effectuer un mouvement de va et vient à l'organe de travail par rapport au boîtier d'outil, l'assemblage d'arbre de sortie comprenant :
un arbre de sortie (20), comprenant des première et deuxième parties, s'étendant depuis des extrémités respectives adjacentes dudit arbre (20) et ayant une section transversale non circulaire dans une direction transversale à un axe longitudinal (Y-Y) dudit arbre (20), et au moins une troisième partie entre lesdites première et deuxième parties, et ayant au moins une section transversale externe au moins partiellement sensiblement circulaire en utilisation, dans une direction transversale à l'axe longitudinal (Y-Y) dudit arbre (20), pour permettre audit arbre (20) de pivoter autour dudit axe longitudinal (Y-Y) par rapport à un mécanisme d'entraînement pour l'entraînement dudit arbre (20) en un mouvement de va et vient par rapport au boîtier d'outil (4), **caractérisé en ce qu'**au moins l'une desdites première et deuxième parties, en utilisation, s'étend à travers un palier (68, 102).

2. Un ensemble selon la revendication 1, dans lequel au moins une dite troisième partie est formée à partir d'une pluralité d'organes formant insert (94), montés sur l'arbre de sortie (20) en utilisation.

3. Un ensemble selon la revendication 2, dans lequel l'arbre de sortie (20) présente une section transversale sensiblement uniforme dans une direction transversale audit axe longitudinal (Y-Y), avant le montage desdits inserts (94) sur ledit arbre de sortie (20).

4. Un ensemble selon la revendication 2 ou 3, dans lequel au moins un dit organe formant insert (94) présente une section transversale sensiblement en forme de D.

5. Un ensemble selon l'une quelconque des revendications précédentes, comprenant en outre au moins un organe d'entraînement (54) monté à pivotement sur au moins une dite troisième partie en utilisation, pour venir en prise avec un mécanisme d'entraînement, pour entraîner ledit arbre (20) en un mouvement de va et vient par rapport au boîtier d'outil (4).

6. Un outil motorisé comprenant un boîtier d'outil (4), un moteur (12) agencé dans le boîtier d'outil (4) et un ensemble d'arbre de sortie selon l'une quelconque des revendications précédentes, comprenant un arbre de sortie (20), adapté pour être entraîné en un mouvement de va et vient par rapport au boîtier d'outil (4) au moyen du moteur (12) et pour supporter un organe de travail (18) de l'outil, pour effectuer un mouvement de va et vient de l'organe de travail (18) par rapport au boîtier d'outil (4).

7. Un outil motorisé selon la revendication 6, dans lequel l'outil motorisé est une scie à découper.
